# EUROPÄISCHE PATENTANMELDUNG

(11) **EP 4 704 354 A1**
(43) Veröffentlichungstag der Anmeldung: **04.03.2026**
(21) Anmeldenummer: 24197202.5
(22) Anmeldetag: 29.08.2024
(51) Int. Cl.: H04B 10/114, H04B 10/116

(54) **ÜBERMITTELN VON DATEN EINES FUNKTIONSGERÄTS MITTELS EINES LICHTSIGNALS AN EIN AUSWERTEGERÄT**

(71) Anmelder: Siemens Aktiengesellschaft, 80333 München (DE)
(72) Erfinder: Spandl, Manfred, 1180 Wien (AT); Hofmann, Andreas, 1140 Wien (AT); Böhm, Wolfgang, 3001 Mauerbach (AT)
(74) Vertreter: Siemens Patent Attorneys

(57) **Zusammenfassung**

Die Erfindung betrifft ein Verfahren zum Übermitteln von Daten (56) eines Funktionsgeräts (12) mittels eines Lichtsignals an ein mobiles Auswertegerät (14), wobei das Funktionsgerät ein Steuersignal für eine Signalleuchte (16) des Funktionsgeräts bereitstellt, wobei ein Betriebszustand des Funktionsgeräts abhängig vom Steuersignal durch Abgeben von sichtbarem Licht (20) visuell erfassbar signalisiert wird, wobei das Steuersignal entsprechend den zu übermittelnden Daten gemäß einem vorgegebenen Modulationsverfahren (48) moduliert wird, sodass das Lichtsignal zusammen mit dem den Betriebszustand signalisierenden Licht (20) durch die Signalleuchte abgegeben wird, wobei das von der Signalleuchte abgegebene Licht von einer pixelbasierten digitalen Lichterfassungseinheit (22) des Auswertegeräts erfasst wird, wobei die Lichterfassungseinheit Lichtsensorelemente (24) aufweist, die in Zeilen (26) und Spalten (28) angeordnet sind, wobei erfasste Lichtwerte der Lichtsensorelemente zeilenweise aufeinanderfolgend oder spaltenweise aufeinanderfolgend ausgelesen werden, wobei von den Lichtsensorelementen erfasste Lichtwerte vom Auswertegerät ausgewertet werden. Erfindungsgemäß werden Modulationsfrequenzen (f0, f1, f2, f3) verwendet, die größer als 1,2 kHz sind.

## Beschreibung

*Unabhängig vom grammatikalischen Geschlecht eines bestimmten Begriffes sind Personen mit männlicher, weiblicher oder anderer Geschlechteridentität mit umfasst.*

Die Erfindung betrifft ein Verfahren zum Übermitteln von Daten eines Funktionsgeräts mittels eines Lichtsignals an ein mobiles Auswertegerät, wobei das Funktionsgerät ein Steuersignal für eine Signalleuchte des Funktionsgeräts bereitstellt, wobei ein Betriebszustand des Funktionsgeräts abhängig vom Steuersignal durch Abgeben von sichtbarem Licht visuell erfassbar signalisiert wird, wobei das Steuersignal entsprechend den zu übermittelnden Daten gemäß einem vorgegebenen Modulationsverfahren moduliert wird, sodass das Lichtsignal zusammen mit dem den Betriebszustand signalisierenden Licht durch die Signalleuchte abgegeben wird, wobei das von der Signalleuchte abgegebene Licht von einer pixelbasierten digitalen Lichterfassungseinheit des Auswertegeräts erfasst wird, wobei die Lichterfassungseinheit Lichtsensorelemente aufweist, die in Zeilen und Spalten angeordnet sind, wobei erfasste Lichtwerte der Lichtsensorelemente zeilenweise aufeinanderfolgend oder spaltenweise aufeinanderfolgend ausgelesen werden, wobei von den Lichtsensorelementen erfasste Lichtwerte vom Auswertegerät ausgewertet werden, um die übermittelten Daten zu bestimmen, wobei die von den Lichtsensorelementen erfassten Lichtwerte entlang einer jeweiligen Zeile oder Spalte der Lichterfassungseinheit innerhalb eines jeweiligen Auslesezeitraums ausgelesen werden, der kleiner als eine halbe Periodendauer einer größten in dem vorgegebenen Modulationsverfahren genutzten Modulationsfrequenz ist. Die Erfindung betrifft ferner ein System zum Übermitteln von Daten eines Funktionsgeräts des Systems mittels eines Lichtsignals an ein mobiles Auswertegerät des Systems, wobei das Funktionsgerät ausgebildet ist, ein Steuersignal für eine Signalleuchte des Funktionsgeräts bereitzustellen, um einen Betriebszustand des Funktionsgeräts abhängig vom Steuersignal durch Abgeben von sichtbarem Licht visuell erfassbar zu signalisieren, wobei das Funktionsgerät ferner ausgebildet ist, das Steuersignal entsprechend den zu übermittelnden Daten gemäß einem vorgegebenen Modulationsverfahren zu modulieren, um das Lichtsignal zusammen mit dem den Betriebszustand signalisierenden Licht durch die Signalleuchte abzugeben, wobei das Auswertegerät eine pixelbasierte digitale Lichterfassungseinheit zum Erfassen des von der Signalleuchte abgegebenen Lichts aufweist, wobei die Lichterfassungseinheit Lichtsensorelemente aufweist, die in Zeilen und Spalten angeordnet sind, wobei das Auswertegerät ausgebildet ist, von den Lichtsensorelementen erfasste Lichtwerte zeilenweise aufeinanderfolgend oder spaltenweise aufeinanderfolgend auszulesen und die von den Lichtsensorelementen erfassten Lichtwerte auszuwerten, um die übermittelten Daten zu bestimmen, wobei das Auswertegerät ferner ausgebildet ist, die von den Lichtsensorelementen erfassten Lichtwerte entlang einer jeweiligen Zeile oder Spalte der Lichterfassungseinheit innerhalb eines jeweiligen Auslesezeitraums auszulesen, der kleiner als eine halbe Periodendauer einer größten in dem vorgegebenen Modulationsverfahren genutzten Modulationsfrequenz ist. Weiterhin betrifft die Erfindung auch ein Funktionsgerät des Systems. Schließlich betrifft die Erfindung auch ein Auswertegerät des Systems.

Gattungsgemäße Verfahren, Systeme, Funktionsgeräte sowie Auswertegeräte sind im Stand der Technik umfänglich bekannt. Solche Verfahren und Systeme dienen dazu, neben der Funktion der Signalleuchte des Funktionsgeräts als visuell erfassbare Betriebsanzeige zusätzliche Informationen vom Funktionsgerät auf einfache Weise erhalten zu können, ohne dass eine ergänzende Hardware erforderlich wäre, mittels der zum Beispiel ein Kommunikationsnetzwerk zum Datenaustausch angeschlossen und genutzt werden kann. In der Regel hat das Funktionsgerät wenigstens eine Signalleuchte, die dazu dient, zum Beispiel eine optische Statusanzeige beziehungsweise eine Betriebsanzeige für einen Nutzer visuell wahrnehmbar darzustellen. Eine solche Signalleuchte kann zum Beispiel eine Leuchtdiode, eine SLD oder eine andere geeignete Leuchte mit einem Leuchtmittel sein, mittels dem die gewünschte Funktion realisierbar ist. Zum Steuern der Signalleuchte nutzt das Funktionsgerät ein Steuersignal, welches von einer Steuereinheit des Funktionsgeräts, beispielsweise einer programmgesteuerten Rechnereinheit oder dergleichen, bereitgestellt werden kann. Mit der Signalleuchte kann zum Beispiel angezeigt werden, dass das Funktionsgerät für eine Aufnahme oder Durchführung einer bestimmungsgemäßen Funktion aktiviert oder betriebsbereit ist.

Funktionsgeräte der gattungsgemäßen Art sind ebenfalls umfänglich bekannt und werden in technischen Einrichtungen, beispielsweise Fertigungsstraßen, besonders im Bereich von Automationskomponenten in elektrischen Anlagen, häufig eingesetzt. Das Funktionsgerät kann zum Beispiel ein Steuergerät für eine speicherprogrammierbare Steuerung, ein Netzteil, ein Netzwerkgerät und/oder dergleichen sein.

Ein hoher Grad an Leistungsfähigkeit und Komplexität führt zu einem entsprechenden Bedarf an Überprüfung und Wartung. Obwohl eine Vielzahl von Funktionsgeräten bereits eine Fernwartung und/oder eine Ferndiagnose unterstützt, sind insbesondere einfachere Funktionsgeräte, beispielsweise Netzteile, bei einer solchen Funktionalität in der Regel nicht integriert. Gleichwohl können derartige Funktionsgeräte für die Funktion eines Gesamtsystems wichtig, insbesondere kritisch, sein. Es besteht daher ein Bedarf, auch für derartige Funktionsgeräte eine Kommunikationsmöglichkeit zu schaffen. Dies soll jedoch mit möglichst wenig zusätzlchem Aufwand erreicht werden können. Dabei soll insbesondere ein Hardwareaufwand möglichst gering sein, vorzugsweise kein zusätzlicher Hardwareaufwand erforderlich sein.

Um bei den letztgenannten Funktionsgeräten ebenfalls die Überprüfung beziehungsweise Wartung verbessern zu können, schlägt zum Beispiel die EP 4 231 547 A1 vor, eine digitale Schnittstelle für das Funktionsgerät zu schaffen, welche es unter Nutzung der Signalleuchte neben der für den Nutzer sichtbar bereitgestellten Visualisierung des Betriebszustands des Funktionsgeräts zusätzlich erlaubt, Daten vom Funktionsgerät an ein mobiles Auswertegerät zu übermitteln. Das für die Signalisierung genutzte Lichtsignal der Signalleuchte wird danach nicht nur als visuell wahrnehmbare Betriebsanzeige sondern unter Nutzung eines Modulationsverfahrens ergänzend einer zusätzlichen Nutzung genutzt, nämlich dem Übermitteln von Daten. Für die Realisierung dieser Funktionalität steht daher lediglich das Steuersignal für die Signalleuchte zur Verfügung. Das Steuersignal wird somit entsprechend den zu übermittelnden Daten gemäß einem vorgegebenen Modulationsverfahren moduliert. Mittels des vorgegebenen Modulationsverfahrens wird somit die ergänzende Funktionalität eingeführt, die über die mit dem Steuersignal übliche optische beziehungsweise visuelle Signalisierung hinausgeht.

Um darüber hinaus die auf die zuvor erläuterte Weise mittels des Lichtsignals übermittelten Daten empfangen zu können, ist das mobile Auswertegerät vorgesehen. Das mobile Auswertegerät ermöglicht es, das von der Signalleuchte abgegebene Licht mittels einer pixelbasierten digitalen Lichterfassungseinheit des Auswertegeräts zu erfassen. Das Auswertegerät ist daher vorzugsweise ein tragbares Gerät, was ein entsprechender Nutzer leicht mitzuführen vermag. Beispielsweise kann das mobile Auswertegerät ein tragbares Funktionsgerät, insbesondere ein Mobilfunkendgerät, vorzugsweise ein Smartphone, oder dergleichen sein. Das Auswertegerät verfügt über die Lichterfassungseinheit, die zum Beispiel eine digitale Kamera oder dergleichen sein kann. Die Lichterfassungseinheit hat Sensorelemente, die in Zeilen und Spalten angeordnet sind, beispielsweise wie bei einer Digitalkamera oder dergleichen. Erfasste Lichtwerte der Sensorelemente werden zeilenweise aufeinanderfolgend oder spaltenweise aufeinanderfolgend ausgelesen. Die erfassten Lichtwerte werden vom Auswertegerät ausgewertet, um die übermittelten Daten zu bestimmen. Dadurch stehen die übermittelten Daten im Auswertegerät für die weitere Nutzung zur Verfügung.

Die zu übermittelnden Daten können beispielsweise weitere Betriebszustände des Funktionsgeräts, Störungsmeldungen, Parametereinstellungen und/oder dergleichen umfassen. In der Lichterfassungseinheit sind die Lichtsensorelemente vorzugsweise nach Art eines Rasters angeordnet. Die von den Lichtsensorelementen erfassten Lichtwerte werden entlang einer jeweiligen Zeile beziehungsweise Spalte der Lichterfassungseinheit innerhalb eines jeweiligen Auslesezeitraums ausgelesen, der kleiner als eine halbe Periodendauer einer größten der in dem vorgegebenen Modulationsverfahren genutzten Modulationsfrequenz ist. Dadurch kann die zuverlässige Datenübertragung realisiert werden. Insbesondere ermöglicht es diese optische Datenübertragung, dass eine Standardkamera eines Nutzerendgeräts beispielsweise des Mobilfunkendgeräts, insbesondere des Smartphones, die erforderliche pixelbasierte digitale Lichterfassungseinheit bereitstellt. Bei einer derartigen Kamera beziehungsweise Lichterfassungseinheit kann dann ein sogenannter "Rolling-Shutter-Effekt" aufgrund des zeilenweise beziehungsweise spaltenweisen Auslesens der von den Lichtsensorelementen erfassten Lichtwerte genutzt werden, um geeignete Abtastraten zu realisieren, die deutlich über einer Frequenz von aufeinanderfolgenden Bildern in einem Videodatenstrom der Kamera sind.

Es hat sich jedoch gezeigt, dass die Nutzung der vorbeschriebenen Technologie dazu führen kann, dass ein Nutzer in dem von der Signalleuchte abgegebenen Licht ein Flackern erkennt und dies zum Beispiel als Störung des Geräts erkennt. Die EP 4 231 547 A1 fordert für diesen Fall, dass ein bestimmtes Tastverhältnis in Bezug auf das Modulieren des Steuersignals eingehalten werden muss. Dies führt andererseits jedoch zu einer deutlichen Reduktion der Datenrate, die unerwünscht ist.

Der Erfindung liegt die Aufgabe zugrunde, ein Verfahren, ein System, ein Funktionsgerät sowie ein Auswertegerät dahingehend zu verbessern, dass visuell erkennbare Effekte bei dem von der Signalleuchte abgegebenen Licht möglichst visuell nicht wahrnehmbar sind.

Als Lösung werden mit der Erfindung ein Verfahren, ein System, ein Funktionsgerät sowie ein Auswertegerät gemäß den unabhängigen Ansprüchen vorgeschlagen.

Vorteilhafte Weiterbildungen ergeben sich durch Merkmale der abhängigen Ansprüche.

In Bezug auf ein gattungsgemäßes Verfahren wird mit der Erfindung insbesondere vorgeschlagen, dass in dem vorgegebenen Modulationsverfahren Modulationsfrequenzen des Modulationsverfahrens verwendet werden, die größer als 1,2 kHz sind.

In Bezug auf ein gattungsgemäßes System wird mit der Erfindung insbesondere vorgeschlagen, dass das Funktionsgerät ferner ausgebildet ist, in einem vorgegebenen Modulationsverfahren Modulationsfrequenzen des Modulationsverfahrens zu verwenden, die größer als 1,2 kHz sind.

In Bezug auf ein gattungsgemäßes Funktionsgerät wird mit der Erfindung vorgeschlagen, dass das Funktionsgerät gemäß der Erfindung ausgebildet ist.

In Bezug auf ein gattungsgemäßes Auswertegerät wird mit der Erfindung insbesondere vorgeschlagen, dass das Auswertegerät gemäß der Erfindung ausgebildet ist.

Die Erfindung basiert unter anderem auf dem Gedanken, dass bei Modulationsfrequenzen, die größer als 1,2 kHz sind, keine visuellen Effekte durch das menschliche Auge mehr wahrnehmbar sind. Es hat sich nämlich gezeigt, dass das menschliche Auge nicht nur eine visuelle Empfindlichkeit im Bereich bis etwa 25 oder 30 Hz aufweist, sondern das unter Umständen auch weit höherfrequente optische Effekte mittels des menschlichen Auges visuell wahrgenommen werden können. Dabei hat sich insbesondere gezeigt, dass ab der Frequenz von 1,2 kHz derartige optische Effekte mittels des menschlichen Auges nicht mehr wahrgenommen werden können. Durch die Nutzung von Modulationsfrequenzen durch das vorgegebene Modulationsverfahren, die größer als 1,2 kHz sind beziehungsweise 1,2 kHz betragen, können somit die eingangs genannten Probleme in Bezug auf Nutzer, die das von der Signalleuchte abgegebene Licht erfassen, vermieden werden. Diese Feststellung ist zunächst unabhängig davon, was für ein Modulationsverfahren für das Modulieren des durch die Signalleuchte abgegebenen Lichts genutzt werden.

Die Erfindung ist natürlich nicht nur darauf beschränkt, dass die Signalleuchte das Licht kontinuierlich abgibt. Die Erfindung ist gleichermaßen auch dann anwendbar, wenn die Signalleuchte das Licht nur zeitweise abgibt oder beispielsweise in einem Taktbetrieb betrieben wird, beispielsweise um ein Blinken visuell erfassbar zu signalisieren. Es versteht sich, dass das Übermitteln der Daten mittels des Lichtsignals nur dann erfolgt, wenn die Signalleuchte aktuell tatsächlich auch Licht abgibt. Darüber hinaus ist die Erfindung natürlich auch nicht darauf beschränkt, dass die Signalleuchte das Licht immer mit der gleichen Farbe oder mit der gleichen Lichtstärke abgibt. Je nach auszugebendem Betriebszustand kann natürlich die Farbe des durch die Signalleuchte abgegebenen Lichts verändert werden, beispielsweise von einem roten Licht zu einem gelben Licht oder einem grünen Licht oder auch umgekehrt. Für die Funktion der Erfindung ist dies nicht relevant. Darüber hinaus kann natürlich vorgesehen, dass das Funktionsgerät mehr als lediglich eine einzige Signalleuchte aufweist, beispielsweise zwei Signalleuchten, drei Signalleuchten oder dergleichen. In diesem Fall kann vorgesehen sein, dass wenigstens eine der Signalleuchten des Funktionsgeräts dazu genutzt wird, das Lichtsignal entsprechend abzugeben. Es kann aber auch vorgesehen sein, dass zwei oder auch noch mehr Signalleuchten zum Abgeben des Lichtsignals genutzt werden. Vorzugsweise kann vorgesehen sein, dass mehrere Signalleuchten gemeinsam zum Abgeben des Lichtsignals genutzt werden, beispielsweise indem sie synchron betrieben werden. Darüber hinaus ist es ebenfalls möglich, dass mehrere Signalleuchten dazu genutzt werden, parallel unterschiedliche Lichtsignale entsprechend unterschiedlichen zu übermittelnden Daten abgeben.

Besonders vorteilhaft erweist es sich, wenn die wenigstens eine Signalleuchte von einer programmierbaren Steuereinheit des Funktionsgeräts unmittelbar angesteuert werden kann. Die Erfindung kann auf diese Weise leicht durch Anpassen eines Rechnerprogramms in dem Funktionsgerät realisiert werden. Dadurch eignet sich die Erfindung auch besonders zum Nachrüsten von bereits vorhandenen Funktionsgeräten.

Das Auswertegerät ist vorzugsweise ein tragbares Gerät, was von einem Nutzer mitgeführt werden kann. Das Auswertegerät weist die pixelbasierte digitale Lichterfassungseinheit auf, die vom Nutzer durch geeignetes Positionieren des Auswertegeräts gegenüber dem Funktionsgerät angeordnet werden kann, sodass die Lichterfassungseinheit das von der Signalleuchte abgegebene Licht zuverlässig zu erfassen vermag. Beispielsweise kann die Lichterfassungseinheit gegenüberliegend zur Signalleuchte angeordnet sein. Das Anordnen kann durch den Nutzer erfolgen, indem er das Auswertegerät geeignet positioniert. Vorzugsweise positioniert der Nutzer das Auswertegerät derart, dass die Lichterfassungseinheit gegenüberliegend zur Signalleuchte angeordnet ist. Ein Abstand zwischen der Signalleuchte und der Lichterfassungseinheit kann dabei wenige Zentimeter oder weniger betragen. Auf diese Weise kann erreicht werden, dass Störungen in Bezug auf das Übermitteln der Daten weitgehend reduziert werden können. Darüber hinaus kann ferner erreicht werden, dass die Datenübermittlung mit geringem technischem Aufwand realisiert werden kann. Besonders vorteilhaft erweist es sich, dass hier insbesondere ein Einhalten von gesetzlichen Vorschriften, Normen und/oder dergleichen mit geringem Aufwand realisiert werden kann. Die Erfindung ermöglicht also eine kostengünstige zuverlässige Kommunikation zwischen dem Funktionsgerät und dem Auswertegerät.

Gemäß einer Weiterbildung wird vorgeschlagen, dass als Modulationsverfahren ein Frequenzumtastverfahren genutzt wird. Das Frequenzumtastverfahren hat sich für die Anwendung der Erfindung als besonders vorteilhaft und leicht umsetzbar herausgestellt. Zugleich kann mit dem Frequenzumtastverfahren eine große Zuverlässigkeit und/oder Störfestigkeit in Bezug auf das Übermitteln der Daten erreicht werden. Das Frequenzumtastverfahren ermöglicht darüber hinaus, eine vergleichsweise große Datenrate zu erreichen, sodass auch ein größeres Datenvolumen innerhalb eines angemessenen Zeitraums vom Funktionsgerät an das Auswertegerät übermittelt werden kann.

Darüber hinaus wird vorgeschlagen, dass das Frequenzumtastverfahren Modulationsfrequenzen nutzt, die zumindest teilweise in einem ganzzahligen Verhältnis zueinander stehen. Diese Weiterbildung hat den Vorteil, dass auf Seiten des Auswertegeräts das Erfassen der Lichtsignale weiter verbessert werden kann. Dies erlaubt es, Lichterfassungseinheiten zu nutzen, die hinsichtlich der Signalvorrichtung besonders einfach konstruiert sind. Trotz der einfachen Konstruktion kann eine zuverlässige Datenübermittlung bei vergleichsweise großer Datenrate erreicht werden.

Weiterhin wird vorgeschlagen, dass in dem vorgegebenen Modulationsverfahren Modulationsfrequenzen des Modulationsverfahrens verwendet werden, die kleiner als 5 kHz sind. Diese Weiterbildung hat den Vorteil, dass an die Anforderungen, die die Lichterfassungseinheit für die bestimmungsgemäße erfindungsgemäße Funktion zu stellen sind, gering sein können. Dies erlaubt es, handelsübliche Kameras von Smartphones für die erfindungsgemäße Funktionalität zu nutzen. Dadurch kann für die Funktion des Auswertegeräts ein breites Anwendungsspektrum an verfügbaren Geräten genutzt werden, ohne dass separate neue Geräte bereitzustellen wären, um die Erfindung nutzbar zu machen. Die Erfindung kann somit auf eine Vielzahl von verfügbaren Geräten zurückgreifen, die als Auswertegerät angepasst werden können, ohne dazu beispielsweise eine spezifische Hardware oder dergleichen vorsehen zu müssen.

Besonders vorteilhaft sind die Daten binäre digitale Daten. Dadurch kann eine einfache Datenverarbeitung und/oder Signalverarbeitung erreicht werden. Besonders vorteilhaft lässt sich diese Weiterbildung mit dem Frequenzumtastverfahren kombinieren.

Das Frequenzumtastverfahren nutzt vorzugsweise wenigstens zwei voneinander verschiedene Modulationsfrequenzen. Es können aber auch mehr als zwei Modulationsfrequenzen vorgesehen sein, beispielsweise drei Modulationsfrequenzen, vier Modulationsfrequenzen oder sogar noch mehr Modulationsfrequenzen. Die Modulationsfrequenzen können zum Beispiel einen äquidistanten Frequenzabstand zueinander aufweisen.

Eine weitere Ausgestaltung sieht vor, dass jedem Bit der Daten mittels des vorgegebenen Modulationsverfahrens wenigstens zwei voneinander unterschiedliche Modulationsfrequenzen zugeordnet werden, die dem Übermitteln des jeweiligen Bits dienen. Die beiden Modulationsfrequenzen werden durch das vorgegeben Modulationsverfahren vorzugsweise zeitlich aufeinanderfolgend zum Übermitteln des jeweiligen Bits bereitgestellt. Dem Grunde nach besteht natürlich auch die Möglichkeit, dass die wenigstens zwei voneinander unterschiedlichen Modulationsfrequenzen zumindest teilweise auch parallel im jeweiligen Übermittlungszeitraum für das jeweilige Bit bereitgestellt sein können. Für das Erfassen des Lichtsignals durch eine besonders einfach konstruierte Lichterfassungseinheit kann es jedoch vorteilhaft sein, die Modulationsfrequenzen zeitlich aufeinanderfolgend vorzugsweise. Es können natürlich auch mehr als lediglich zwei voneinander unterschiedliche Modulationsfrequenzen einem jeweiligen Bit zugeordnet werden. Die Erfindung ist nicht hierauf beschränkt.

Darüber hinaus wird vorgeschlagen, dass das Modulationsverfahren an einem Übergang von zwei aufeinanderfolgenden Bits die Modulationsfrequenz von einer ersten Modulationsfrequenz zu einer zweiten Modulationsfrequenz wechselt. Auf diese Weise ist es seitens des Auswertegeräts einfach möglich, zwei aufeinanderfolgende Bits als separate Bits voneinander zu unterscheiden. Darüber hinaus ist es ferner auf einfache Weise möglich, eine Taktrate für das Übertragen der Daten durch die Lichtsignale zu bestimmen. Dies kann für die weitere Signalverarbeitung durch das Auswertegerät vorteilhaft sein.

Ferner wird vorgeschlagen, dass für das Übermitteln der Daten eine Übermittlungscharakteristik ermittelt wird, wobei die Modulationsfrequenzen für das vorgegebene Modulationsverfahren abhängig von der Übermittlungscharakteristik gewählt werden. Diese Weiterbildung ermöglicht es, ein Übertragungsverhalten zum Übermitteln der Daten vom Funktionsgerät zum Auswertegerät sowie unter Umständen auch Eigenschaften der Signalleuchte beziehungsweise der Lichterfassungseinheit zu berücksichtigen, um dadurch eine besonders störfeste Kommunikationsverbindung zu realisieren. Beispielsweise kann vorgesehen sein, dass die Übermittlungscharakteristik einen Frequenzbereich aufweist, der sich für das Übermitteln der Modulationsfrequenzen besonders eignet, weil eine Dämpfung vergleichsweise klein ist. Andererseits kann erreicht werden, dass ein Bereich in der Übermittlungscharakteristik, bei dem eine Modulationsfrequenz eine besonders große Dämpfung erfahren würde, durch das vorgegebene Modulationsverfahren nicht genutzt wird. Insgesamt kann somit die Funktionalität der Erfindung weiter verbessert werden.

Darüber hinaus wird vorgeschlagen, dass wenigstens eine Modulationsfrequenz des vorgegebenen Modulationsverfahrens in einem Bereich eines lokalen Maximums der Übermittlungscharakteristik gewählt wird, wobei die Übermittlungscharakteristik durch eine durch die Lichtsensorelemente erfassbare Lichtmenge bestimmt wird. Dadurch ist es möglich, unter Berücksichtigung der Eigenschaften der Lichtsensorelemente beziehungsweise der Lichterfassungseinheit für das Übermitteln der Daten besonders geeignete Modulationsfrequenzen zu bestimmen, die durch das vorgegebene Modulationsverfahren genutzt werden. Auch dies kann die Nutzung der Erfindung weiter verbessern.

Besonders vorteilhaft erweist es sich, wenn die Übermittlungscharakteristik mehrere lokale Maxima aufweist, wobei das vorgegebene Modulationsverfahren mehrere Modulationsfrequenzen verwendet, wobei eine jeweilige Modulationsfrequenz in einem Bereich eines jeweiligen lokalen Maximums der Übermittlungscharakteristik gewählt wird. Dadurch ist eine gute Trennung der Modulationsfrequenzen untereinander möglich. Insbesondere kann die Störfestigkeit und die Zuverlässigkeit des bestimmungsgemäßen Betriebs der Erfindung weiter verbessert werden.

Weiterhin erweist es sich als vorteilhaft, wenn wenigstens zwei Modulationsfrequenzen durch zumindest einen Bereich eines lokalen Minimums der Übermittlungscharakteristik voneinander beabstandet sind. Auch diese Weiterbildung ermöglicht ist, die Zuverlässigkeit und die Störfestigkeit des erfindungsgemäßen Betriebs weiter zu verbessern.

Die Übermittlungscharakteristik kann zum Beispiel eine frequenzabhängige Dämpfung beziehungsweise einen frequenzabhängigen Energieübertragungswert charakterisieren. Die Übermittlungscharakteristik kann zum Beispiel zumindest von einer Charakteristik des Funktionsgeräts, insbesondere in Bezug auf die Signalleuchte und/oder deren Betrieb, einer Charakteristik der Lichterfassungseinheit, des Auswertegeräts sowie auch einer Signalauswertung durch das Auswertegerät und/oder dergleichen bestimmt sein.

Es wird ferner vorgeschlagen, dass das Auswertegerät ein Smartphone aufweist. Dadurch ist es auf einfache Weise möglich, eine Vielzahl von kostengünstigen Auswertegeräten zur Verfügung zu stellen und für die Erfindung nutzbar zu machen.

Besonders vorteilhaft erweist es sich, wenn das Auswertegerät ein Smartphone aufweist, insbesondere durch ein Smartphone gebildet ist, wobei das Smartphone eine Kamera als Lichterfassungseinheit aufweist, die die erfassten Lichtwerte in Form von Bilddaten bereitstellt, wobei auf dem Smartphone eine Anwendung installiert ist, die die von der Kamera bereitgestellten Bilddaten auswertet, um die übermittelten Daten zu bestimmen. Auf diese Weise ist es möglich, ein handelsübliches Smartphone als Auswerteeinheit zu ertüchtigen. Es brauchen daher für die Nutzung der Erfindung keine separaten Auswertegeräte konstruiert zu werden. Vielmehr kann ein handelsübliches Smartphone auf einfache Weise durch Installieren einer App dazu ertüchtigt werden, die Funktionen des Auswertegeräts in Verbindung mit der Kamera als Lichterfassungseinheit zu realisieren.

Die für das erfindungsgemäße Verfahren angegebenen Vorteile und Wirkungen gelten gleichmäßig auch für das erfindungsgemäße System, das erfindungsgemäße Funktionsgerät und die erfindungsgemäße Auswerteeinheit sowie umgekehrt. Insbesondere können daher auch Verfahrensmerkmale als Vorrichtungsmerkmale oder umgekehrt formuliert sein.

Bei den im Folgenden erläuterten Ausführungsbeispielen handelt es sich um bevorzugte Ausführungsformen der Erfindung. Die vorhergehend in der Beschreibung angegebenen Merkmale, Merkmalskombinationen sowie auch die in der folgenden Beschreibung von Ausführungsbeispielen genannten und/oder in den Figuren alleine gezeigten Merkmale und Merkmalskombinationen sind nicht nur in der jeweils angegebenen Kombination, sondern auch in anderen Kombinationen verwendbar. Es sind somit auch Ausführungen von der Erfindung umfasst beziehungsweise als offenbart anzusehen, die in den Figuren nicht explizit gezeigt und erläutert sind, jedoch durch separierte Merkmalskombinationen aus den erläuterten Ausführungsformen hervorgehen und erzeugbar sind. Die anhand der Ausführungsbeispiele dargestellten Merkmale, Funktionen und/oder Wirkungen können für sich genommen jeweils einzelne, unabhängig voneinander zu betrachtende Merkmale, Funktionen und/oder Wirkungen der Erfindung darstellen, welche die Erfindung jeweils auch unabhängig voneinander weiterbilden. Daher sollen die Ausführungsbeispiele auch andere Kombinationen als die in den erläuterten Ausführungsformen umfassen. Darüber hinaus können die beschriebenen Ausführungsformen auch durch weitere der bereits beschriebenen Merkmale, Funktionen und/oder Wirkungen der Erfindung ergänzt sein.

In den Figuren bezeichnen gleiche Bezugszeichen gleiche Merkmale beziehungsweise Funktionen.

Dabei zeigen:
FIG 1 in einer schematischen Blockdarstellung ein System zum Übermitteln von Daten eines Netzteils mittels eines Lichtsignals an ein Smartphone,
FIG 2 in einer schematischen Blockdarstellung einen Ausschnitt des Smartphones gemäß FIG 1 mit einer Kamera zum Erfassen und Demodulieren der Daten,
FIG 3 eine schmatische Signaldarstellung eines von der Kamera bereitgestellten Videodatenstroms,
FIG 4 eine schematische Signaldarstellung für ein 4-FSK-Modulationsverfahren zum Übermitteln der Daten durch das System gemäß FIG 1, und
FIG 5 eine schematische Diagrammdarstellung einer Übertragungscharakteristik, welches insbesondere Eigenschaften der Kamera des Smartphones gemäß FIG 2 berücksichtigt.

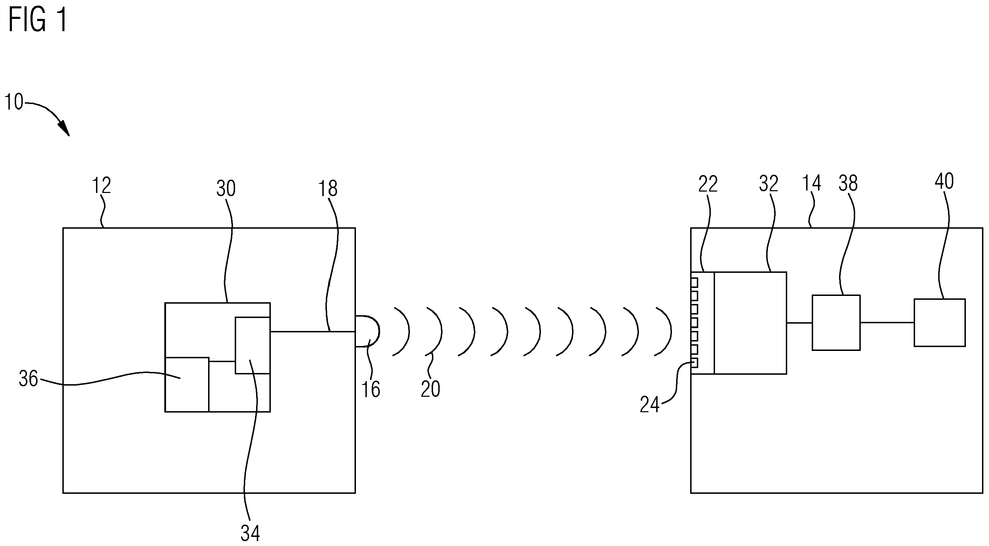

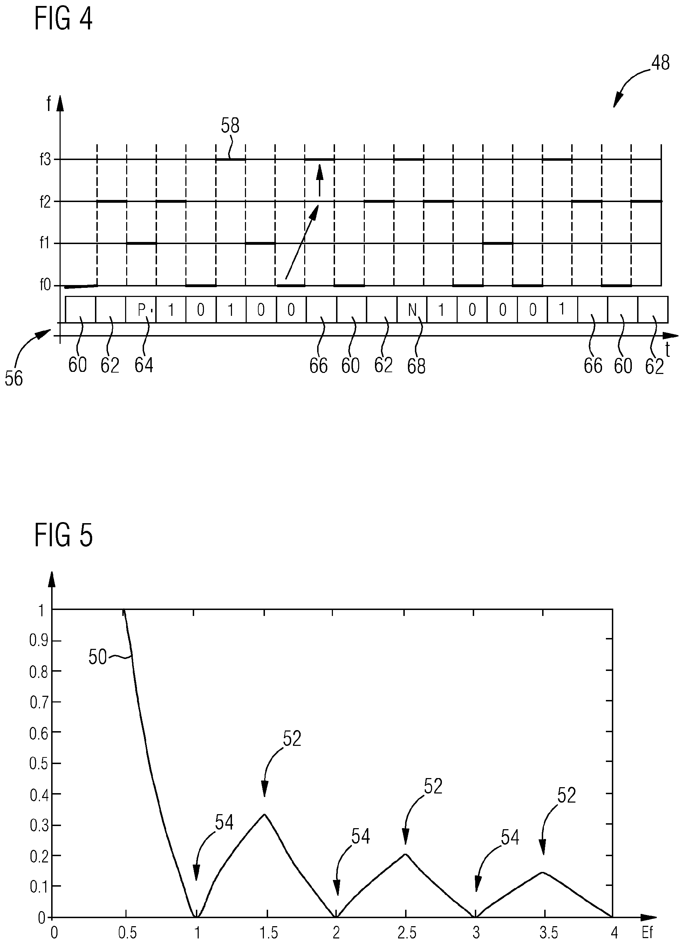

FIG 1 zeigt in einer schematischen Blockdarstellung ein System 10 zum Übermitteln von Daten 56 (FIG 4) eines Netzteils 12 als Funktionsgerät des Systems 10 mittels eines Lichtsignals an ein Smartphone 14 als mobiles Auswertegerät des Systems 10. Das Netzteil 12 ist ausgebildet, ein Steuersignal für eine Signalleuchte 16 des Netzteils 12 bereitzustellen. Die Signalleuchte 16 ist vorliegend durch eine Leuchtdiode gebildet, die über eine Steuerleitung 18 mit einem Steuermodul 30 des Netzteils 12 elektrisch verbunden ist. Das Steuermodul 30 kann einen oder mehrere Betriebszustände des Netzteils 12 bestimmen oder vorgeben und gibt abhängig vom jeweils aktuellen Betriebszustand ein entsprechendes Steuersignal auf die Steuerleitung 18, um den jeweiligen Betriebszustand des Netzteils 12 abhängig vom Steuersignal durch Abgeben von sichtbarem Licht 20 visuell erfassbar zu signalisieren. In der vorliegenden Ausgestaltung ist vorgesehen, dass der Betriebszustand durch einen Aktivzustand bestimmt ist, indem das Netzteil 12 in bestimmungsgemäßer Weise eine elektrische Energieversorgung für ein weiteres, nicht dargestelltes Gerät bereitstellt. Das Licht 20 ist von einem nicht dargestellten Nutzer mittels seines Auges visuell erfassbar, sodass er unmittelbar erkennen kann, dass das Netzteil 12 im aktivierten Betriebszustand ist, um die gewünschte Energieversorgung bereitzustellen.

Das Netzteil 12 ist vorliegend Bestandteil einer nicht weiter dargestellten Anlagensteuerung einer Fertigungsanlage. Insbesondere für die Überwachung beziehungsweise Wartung der Anlage ist es wünschenswert, wenn weitere Daten des Netzteils 12 verfügbar sind, beispielsweise eine aktuelle elektrische Leistung des Netzteils 12, ein aktueller Strom, eine aktuelle Spannung, Daten in Bezug auf Schutzfunktionen, mit der eine Überlastung des Netzteils 12 begrenzt oder vermieden werden kann, eine Temperatur und/oder dergleichen. Im Stand der Technik ist es hierfür üblich, das Netzteil 12 mit einem Kommunikationsnetzwerk zu verbinden, sodass die gewünschten Daten über das Kommunikationsnetzwerk abgefragt werden können. Zu diesem Zweck ist es im Stand der Technik üblich, eine entsprechende zusätzliche Hardware und eine entsprechende zusätzliche Software im Netzteil 12 vorzusehen, mittels welchen die gewünschte Funktionalität erreicht werden kann. Dies ist jedoch aufwändig und teuer und insbesondere bei Anlagen, die eine Vielzahl von beispielsweise kleineren Funktionsgeräten aufweisen, ineffizient.

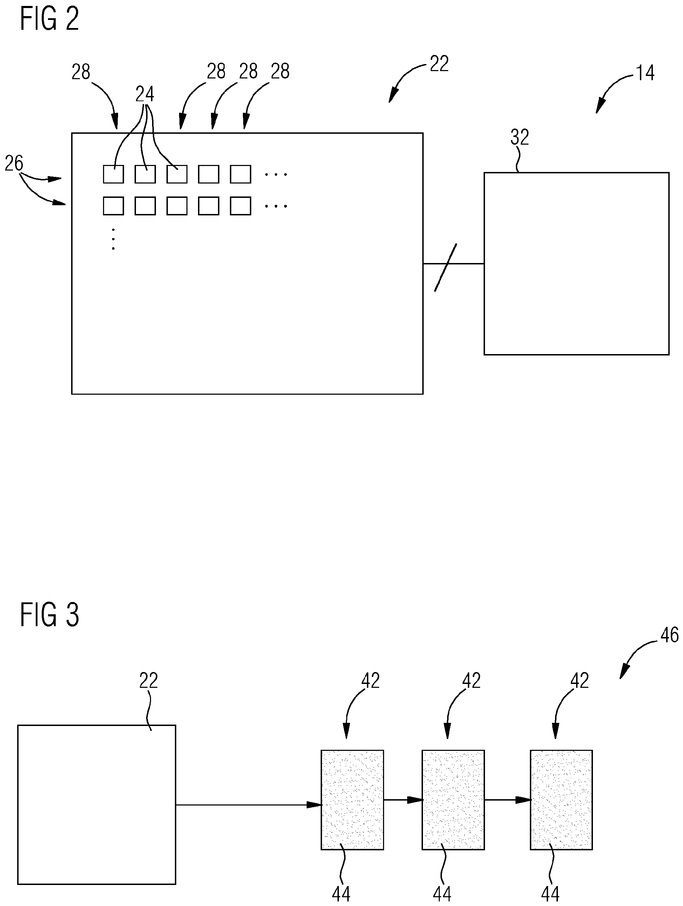

Um diesen Nachteil zu reduzieren, kann das von der Signalleuchte 16 abgegebene Licht 20 ergänzend genutzt werden, um die Daten 56 an das Smartphone 14 zu übertragen. Auf diese Weise braucht keine separate Hardware im Netzteil 12 mehr vorgesehen zu sein. Vielmehr kann das Steuersignal entsprechend den zu übermittelnden Daten 56 gemäß einem vorgegebenen Modulationsverfahren 48 moduliert werden, um das Lichtsignal zusammen mit dem den Betriebszustand signalisierenden Licht 20 durch die Signalleuchte 16 abzugeben. Dieses abgegebene Licht 20 kann mittels des Smartphones 14, und zwar dessen Kamera 22 erfasst werden. Dabei kann berücksichtigt werden, dass die Kamera 22 in der Regel als Digitalkamera in Form einer pixelbasierten digitalen Lichterfassungseinheit ausgebildet ist, die Lichtsensorelemente 24 aufweist, die in Zeilen 26 und Spalten 28 angeordnet sind, sowie dies anhand von FIG 2 ersichtlich ist.

Das Smartphone 14 weist eine Steuereinheit 32 auf, die unter anderem eine nicht weiter dargestellte programmgesteuerte Rechnereinheit umfasst. Die Steuereinheit 32 ist mit der Kamera 22 kommunikationstechnisch gekoppelt und ausgebildet, von den Lichtsensorelementen 24 erfasste Lichtwerte zeilenweise aufeinanderfolgend oder auch spaltenweise aufeinanderfolgend auszulesen. Sind alle Zeilen 26 beziehungsweise Spalten 28 aufeinanderfolgend ausgelesen, kann dieser Vorgang zyklisch wiederholt werden, sodass die erfassten Lichtwerte in Form eines Videodatenstroms 46 von Bildern 42 mit Bilddaten 44 bereitgestellt wird, die unter anderem die übermittelten Daten 56 enthalten. Die Steuereinheit 32 wertet die erfassten Lichtwerte aus und bestimmt die übermitteln Daten 56.

Das System 10 ist dabei derart ausgelegt, dass die von den Lichtsensorelementen 24 erfassten Lichtwerte entlang einer jeweiligen Zeile 26 oder Spalte 28 der Lichterfassungseinheit 24 innerhalb eines jeweiligen Auslesezeitraums ausgelesen werden, der kleiner als eine halbe Periodendauer der größten in dem vorgegebenen Modulationsverfahren 48 genutzten Modulationsfrequenzen f0, f1, f2, f3 ist. Dies ist anhand von FIG 4 weiter erläutert.

In der vorliegenden Ausgestaltung ist vorgesehen, dass das Netzteil 12 ausgebildet ist, in dem vorgegebenen Modulationsverfahren 48 die Modulationsfrequenzen f0, f1, f2, f3 des Modulationsverfahrens 48 im Rahmen eines Frequenzumtastverfahrens (englisch: frequency shift keying; FSK) zu verwenden, die einerseits größer als 1,2 kHz sind und andererseits kleiner als 5 kHz sind. Es handelt sich also vorliegend um ein 4-FSK-Modulationsverfahren. Diese Auswahl ermöglicht es, dass einerseits die von dem vorgegebenen Modulationsverfahren 48 genutzten Modulationsfrequenzen f0, f1, f2, f3 größer als 1,2 kHz sind, sodass ein Nutzer mit seinem Auge Lichtschwankungen im Wesentlichen nicht zu erkennen vermag. Das hat den Vorteil, dass aus Nutzersicht die Signalleuchte 16 weiterhin kontinuierlich leuchtet, wenn der jeweilige Betriebszustand angezeigt wird, und unter anderem ein Flackern aufgrund der Modulation vermieden werden kann. Die visuelle Signalisierungsfunktion der Signalleuchte 16 kann dadurch im Wesentlichen ungestört aufrechterhalten werden.

Zugleich ermöglicht es die Erfindung, mit dem Licht 20 trotzdem die Lichtsignale abzugeben, mit denen die Daten 56 übertragen werden können. Zu diesem Zweck ist vorgesehen, dass die Modulationsfrequenzen kleiner als 5 kHz sind. Dabei wird berücksichtigt, dass es sich bei der Kamera 22 um eine Kamera handelt, die als pixelbasierte digitale Kamera ausgebildet ist und bei der die Lichtsensorelemente 24 in den Zeilen 26 und den Spalten 28 angeordnet sind. Je nach Konstruktion des Smartphones 14 kann vorgesehen sein, dass die Zeilen 26 entweder zyklisch zeilenweise aufeinanderfolgend oder zyklisch spaltenweise aufeinanderfolgend ausgelesen werden. Für die Funktion der Erfindung ist dies jedoch nicht relevant. Unter Nutzung des Rolling-Shutter-Effekts, der aufgrund dieser Signalverarbeitung der Kamera 22 im Smartphone 14 genutzt wird, ist es möglich, aus den Lichtsignalen die Daten 56 zu bestimmen.

Wie aus FIG 1 ferner ersichtlich ist, weist das Steuermodul 30 einen Frequenzumtastmodulator 34 auf, der die Daten 56 aus einem Datenspeicher 36 des Steuermoduls 30 empfängt und entsprechend dem vorgegebenen Modulationsverfahren 48 auf das Steuersignal aufmoduliert, sodass das modulierte Steuersignal über die Steuerleitung 18 an die Signalleuchte 16 abgegeben wird.

An die Steuereinheit 32 ist ferner an einen Frequenzumtastdemodulator 38 angeschlossen, mittels dem eine Demodulation des erfassten Lichtsignals realisiert werden kann. Der Frequenzumtastdemodulator 38 liefert die auf diese Weise bestimmten Daten 56 an die Verarbeitungseinheit 40 des Smartphones 14, sodass diese bedarfsgerecht weiterverarbeitet werden können. Die Weiterverarbeitung kann zum Beispiel darin bestehen, dass die Daten 56 an eine entfernte Zentrale über ein Mobilfunknetz übermittelt werden. Es kann auch vorgesehen sein, dass die Daten 56 auswählbar auf einem Bildschirm des Smartphones 14 visuell dargestellt werden.

FIG 2 zeigt in einer schematischen Blockdiagramm die Kamera 22 mit den Lichtsensorelementen 24, die in den Zeilen 26 und den Spalten 28 angeordnet sind. Über eine entsprechende nicht dargestellte elektrische Matrixverschaltung sind die Lichtsensorelemente 24 mit der Steuereinheit 32 des Smartphones 14 elektrisch verbunden. Die Steuereinheit 32 ist ausgebildet, das entsprechende Auslesen der Lichtwerte zu realisieren. Die Steuereinheit 32 weist eine nicht dargestellte programmgesteuerte Rechnereinheit auf.

FIG 3 zeigt in einer schematischen Signaldarstellung den von der Kamera 22 bereitgestellten Videodatenstrom 46. Aus FIG 3 ist ersichtlich, dass der Videodatenstrom 46 aufeinanderfolgende Bilder 42 umfasst, wobei jedes Bild 42 entsprechende Bilddaten 44 enthält. Die Bilddaten 44 entsprechen den jeweiligen durch die Lichtsensorelemente 24 erfassten Lichtwerten. So kann beispielsweise einem jeweiligen Pixel des Bilds 42 ein entsprechender Lichtwert eines jeweiligen Lichtsensorelements 24 zugeordnet werden. In der vorliegenden Ausgestaltung ist vorgesehen, dass die Lichtwerte als digitale Bilddaten 44 vorliegen.

In der vorliegenden Ausgestaltung ist vorgesehen, dass als Modulationsverfahren 48 ein Frequenzumtastverfahren genutzt wird. FIG 4 zeigt eine schematische Signaldarstellung für ein in der vorliegenden Ausgestaltung genutztes Modulationsverfahren, welches ein 4-FSK-Modulationsverfahren ist und zum Übermitteln der Daten 56 durch das System 10 gemäß FIG 1 dient. Wie aus FIG 4 ersichtlich ist, nutzt das Frequenzumtastverfahren die Modulationsfrequenzen f0, f1, f2, f3, die vorliegend jeweils in einem ganzzahligen Verhältnis zueinander stehen. Darüber hinaus ist aus FIG 4 ersichtlich, dass einem jeweiligen Bit der Daten 56 mittels des vorgegebenen Modulationsverfahrens 48 jeweils zwei voneinander unterschiedliche Modulationsfrequenzen f0, f1, f2, f3 zugeordnet werden, die dem Übermitteln des jeweiligen Bits dienen. Ein Graph 58 kennzeichnet einen Frequenzverlauf, den er durch eine Datenfolge gemäß den in FIG 4 dargestellten Daten 56 zur Folge hat. Wie anhand des Graphen 58 ersichtlich ist, werden dem Datenstrom 56 im Rahmen des Modulationsverfahrens 48 ergänzend Bits hinzugefügt, und zwar ein Initialisierungsbit 60, ein Startbit 62, ein Bit 64 zum Anzeigen einer positiven Logik, ein Stoppbit 66 und ein Bit 68 zum Anzeigen einer negativen Logik. Der auf diese Weise vorbereitet Datenfolge werden dann im Rahmen des Modulationsverfahrens 48 die entsprechenden Modulationsfrequenzen f0, f1, f2, f3 gemäß dem Graphen 58 zugeordnet. Dieses Signal wird dann dem Steuersignal auf der Steuerleitung 18 überlagert, sodass es durch die Signalleuchte 16 mit dem Licht 20 als Lichtsignal abgegeben werden kann.

Wie aus FIG 4 ersichtlich ist, beginnt der Datenstrom mit einem Initialisierungsbit 60, dem ein Startbit 62 folgt. Dem Initialisierungsbit 60 ist vorliegend immer die Modulationsfrequenz f0 zugeordnet. Dem Initialisierungsbit 60 folgt ein Startbit 62, dem vorliegend immer die Modulationsfrequenz f2 zugeordnet ist. Dadurch ist es einem Empfänger, hier dem Smartphone 14, möglich, den Beginn einer Datenfolge zu erkennen. Als Nächstes folgt im vorliegenden Datenstrom die Übermittlung des Bits 64 für die Anzeige der positiven Logik, in dem die Modulationsfrequenz f1 übermittelt. Daran schließt sich die Übermittlung von Datenbits 10100 an, wobei jeweilige Modulationsfrequenzen übermittelt werden, wie sie anhand des Graphen 58 ersichtlich sind. Damit beim Übermitteln des letzten Bits, welches durch die Modulationsfrequenz f0 übermittelt wird, nicht ein Signalanfang übermittelt wird, wird im Folgenden als Stoppbit 66 die Modulationsfrequenz f3 übermittelt.

Daran schließt sich die erneute Übermittlung des Initialisierungsbits 60 und des Startbits 62 an, sodass empfängerseitig, das heißt, seitens des Smartphones 14, ersichtlich ist, dass jetzt eine neue Datenfolge folgt. Nach den Startbit 62 wird nun das Bit 68 für die negative Logik zunächst übermittelt, indem die Modulationsfrequenz f3 übertragen wird. Daran schließt sich die Übermittlung einer Datenfolge 10001 an, zu welchem Zweck die Modulationsfrequenzen gemäß dem Graphen 58 übermittelt werden. Schließlich endet diese Übermittlung mit dem Stoppbit 66, dem in diesem Fall die Modulationsfrequenz f2 zugeordnet ist. Daran schließt sich eine erneute Übermittlung des Initialisierungsbits 60 und des Startbits 62 an, so wie dies bereits zuvor erläutert wurde, woraufhin eine weitere Bitfolge übermittelt werden kann, die jedoch in FIG 4 nicht mehr dargestellt ist.

Wie aus FIG 4 ersichtlich ist, wechselt das Modulationsverfahren 48 an einem Übergang von zwei aufeinanderfolgenden Bits der Daten 56 die Modulationsfrequenz von einer ersten Modulationsfrequenz zu einer zweiten Modulationsfrequenz. Dadurch ist es empfängerseitig gut erkennbar, dass ein neues Bit gesendet wird.

FIG 5 zeigt eine schematische Diagrammdarstellung einer Übermittlungscharakteristik, welches insbesondere Eigenschaften der Kamera 22 des Smartphones 14 gemäß FIG 2 berücksichtigt. In FIG 5 ist eine Abszisse einem Produkt aus einer Belichtungszeit mit einer Frequenz zugeordnet und eine Ordinate einer normierten Amplitude von erfasstem Licht 20 durch die Kamera 22 zugeordnet. Mit einem Graphen 50 ist ein entsprechender Verlauf einer sich hieraus ergebenden Übermittlungscharakteristik dargestellt. Wie aus FIG 5 ersichtlich ist, liegen bei den Werte 1, 2, 3, 4 jeweilige lokale Minima 54 vor. Dagegen liegen bei den Werten 0,5, 1,5, 2,5 und 3,5 jeweilige lokale Maxima 52 vor. In der vorliegenden Ausgestaltung ist vorgesehen, dass die Modulationsfrequenzen f0, f1, f2, f3 in den Bereichen der jeweiligen lokalen Maxima 52 gewählt sind. Dadurch kann eine besonders günstige Signalübertragung mit hoher Zuverlässigkeit und Störfestigkeit erreicht werden. Dies ermöglicht es ferner, dass die Modulationsfrequenzen f0, f1, f2, f3 durch die Bereiche der lokalen Minima 54 der Übermittlungscharakteristik voneinander beabstandet sind.

In einer alternativen Ausgestaltung kann vorgesehen sein, dass jedem Bit der Daten 56 mittels des vorgegebenen Modulationsverfahrens 48 zwei voneinander unterschiedliche Modulationsfrequenzen zugeordnet werden, die dem Übermitteln des jeweiligen Bits dienen. Das heißt, bei dieser Ausgestaltung ändert sich die Modulationsfrequenz während der Übertragung eines jeweiligen Bits.

Die Ausführungsbeispiele dienen ausschließlich der Erläuterung der Erfindung und sollen diese nicht beschränken.

### Bezugszeichenliste

- 10: System
- 12: Netzteil
- 14: Smartphone
- 16: Signalleuchte
- 18: Steuerleitung
- 20: Licht
- 22: Digitalkamera
- 24: Lichtsensorelemente
- 26: Zeile
- 28: Spalte
- 30: Steuermodul
- 32: Steuereinheit
- 34: Frequenzumtastmodulator
- 36: Datenspeicher
- 38: Frequenzumtastdemodulator
- 40: Verarbeitungseinheit
- 42: Bild
- 44: Bilddaten
- 46: Videodatenstrom
- 48: Modulationsverfahren
- 50: Graph
- 52: lokales Maximum
- 54: lokales Minimum
- 56: Daten
- 58: Graph
- 60: Initialisierungsbit
- 62: Startbit
- 64: positive Logik
- 66: Stoppbit
- 68: negative Logik
- f0: Modulationsfrequenz
- f1: Modulationsfrequenz
- f2: Modulationsfrequenz
- f3: Modulationsfrequenz

## Patentansprüche

1. Verfahren zum Übermitteln von Daten (56) eines Funktionsgeräts (12) mittels eines Lichtsignals an ein mobiles Auswertegerät (14), wobei das Funktionsgerät (12) ein Steuersignal für eine Signalleuchte (16) des Funktionsgeräts (12) bereitstellt, wobei ein Betriebszustand des Funktionsgeräts (12) abhängig vom Steuersignal durch Abgeben von sichtbarem Licht (20) visuell erfassbar signalisiert wird, wobei das Steuersignal entsprechend den zu übermittelnden Daten (56) gemäß einem vorgegebenen Modulationsverfahren (48) moduliert wird, sodass das Lichtsignal zusammen mit dem den Betriebszustand signalisierenden Licht (20) durch die Signalleuchte (16) abgegeben wird, wobei das von der Signalleuchte (16) abgegebene Licht (20) von einer pixelbasierten digitalen Lichterfassungseinheit (22) des Auswertegeräts (14) erfasst wird, wobei die Lichterfassungseinheit (22) Lichtsensorelemente (24) aufweist, die in Zeilen (26) und Spalten (28) angeordnet sind, wobei erfasste Lichtwerte der Lichtsensorelemente (24) zeilenweise aufeinanderfolgend oder spaltenweise aufeinanderfolgend ausgelesen werden, wobei von den Lichtsensorelementen (24) erfasste Lichtwerte vom Auswertegerät (14) ausgewertet werden, um die übermittelten Daten (56) zu bestimmen, wobei die von den Lichtsensorelementen (24) erfassten Lichtwerte entlang einer jeweiligen Zeile (26) oder Spalte (28) der Lichterfassungseinheit (22) innerhalb eines jeweiligen Auslesezeitraums ausgelesen werden, der kleiner als eine halbe Periodendauer einer größten in dem vorgegebenen Modulationsverfahren (48) genutzten Modulationsfrequenz (f0, f1, f2, f3) ist,
**dadurch gekennzeichnet, dass**
in dem vorgegebenen Modulationsverfahren (48) Modulationsfrequenzen (f0, f1, f2, f3) des Modulationsverfahrens (48) verwendet werden, die größer als 1,2 kHz sind.

2. Verfahren nach Anspruch 1, **dadurch gekennzeichnet, dass** als Modulationsverfahren (48) ein Frequenzumtastverfahren genutzt wird.

3. Verfahren nach Anspruch 2, **dadurch gekennzeichnet, dass** das Frequenzumtastverfahren Modulationsfrequenzen (f0, f1, f2, f3) nutzt, die zumindest teilweise in einem ganzzahligen Verhältnis zueinander stehen.

4. Verfahren nach einem der vorhergehenden Ansprüche, **dadurch gekennzeichnet, dass** in dem vorgegebenen Modulationsverfahren (48) Modulationsfrequenzen (f0, f1, f2, f3) des Modulationsverfahrens (48) verwendet werden, die kleiner als 5 kHz sind.

5. Verfahren nach einem der vorhergehenden Ansprüche, **dadurch gekennzeichnet, dass** die Daten (56) binäre digitale Daten sind.

6. Verfahren nach Anspruch 5, **dadurch gekennzeichnet, dass** jedem Bit der Daten (56) mittels des vorgegebenen Modulationsverfahrens (48) wenigstens zwei voneinander unterschiedliche Modulationsfrequenzen (f0, f1, f2, f3) zugeordnet werden, die dem Übermitteln des jeweiligen Bits dienen.

7. Verfahren nach Anspruch 5 oder 6, **dadurch gekennzeichnet, dass** das Modulationsverfahren (48) an einem Übergang von zwei aufeinanderfolgenden Bits die Modulationsfrequenz (f0, f1, f2, f3) von einer ersten Modulationsfrequenz zu einer zweiten Modulationsfrequenz wechselt.

8. Verfahren nach einem der vorhergehenden Ansprüche, **dadurch gekennzeichnet, dass** für das Übermitteln der Daten (56) eine Übermittlungscharakteristik (50) ermittelt wird, wobei die Modulationsfrequenzen (f0, f1, f2, f3) für das vorgegebene Modulationsverfahren (48) abhängig von der Übermittlungscharakteristik (50) gewählt werden.

9. Verfahren nach Anspruch 8, **dadurch gekennzeichnet, dass** wenigstens eine Modulationsfrequenz (f0, f1, f2, f3) des vorgegebenen Modulationsverfahrens (48) in einem Bereich eines lokalen Maximums (52) der Übermittlungscharakteristik (50) gewählt wird, wobei die Übermittlungscharakteristik (50) durch eine durch die Lichtsensorelemente (24) erfassbare Lichtmenge bestimmt wird.

10. Verfahren nach Anspruch 9, **dadurch gekennzeichnet, dass** die Übermittlungscharakteristik mehrere lokale Maxima aufweist, wobei das vorgegebene Modulationsverfahren (48) mehrere Modulationsfrequenzen (f0, f1, f2, f3) verwendet, wobei eine jeweilige Modulationsfrequenz (f0, f1, f2, f3) in einem Bereich eines jeweiligen lokalen Maximums (52) der Übermittlungscharakteristik (50) gewählt wird.

11. Verfahren nach einem der vorhergehenden Ansprüche, **dadurch gekennzeichnet, dass** wenigstens zwei Modulationsfrequenzen (f0, f1, f2, f3) durch zumindest einen Bereich eines lokalen Minimums (54) der Übermittlungscharakteristik (50) voneinander beabstandet sind.

12. System (10) zum Übermitteln von Daten (56) eines Funktionsgeräts (12) des Systems (10) mittels eines Lichtsignals an ein mobiles Auswertegerät (14) des Systems (10), wobei das Funktionsgerät (12) ausgebildet ist, ein Steuersignal für eine Signalleuchte (16) des Funktionsgeräts (12) bereitzustellen, um einen Betriebszustand des Funktionsgeräts (12) abhängig vom Steuersignal durch Abgeben von sichtbarem Licht (20) visuell erfassbar zu signalisieren, wobei das Funktionsgerät (12) ferner ausgebildet ist, das Steuersignal entsprechend den zu übermittelnden Daten (56) gemäß einem vorgegebenen Modulationsverfahren (48) zu modulieren, um das Lichtsignal zusammen mit dem den Betriebszustand signalisierenden Licht (20) durch die Signalleuchte (16) abzugeben, wobei das Auswertegerät (14) eine pixelbasierte digitale Lichterfassungseinheit (22) zum Erfassen des von der Signalleuchte (16) abgegebenen Lichts (20) aufweist, wobei die Lichterfassungseinheit (22) Lichtsensorelemente (24) aufweist, die in Zeilen (26) und Spalten (28) angeordnet sind, wobei das Auswertegerät (14) ausgebildet ist, von den Lichtsensorelementen (24) erfasste Lichtwerte zeilenweise aufeinanderfolgend oder spaltenweise aufeinanderfolgend auszulesen und die von den Lichtsensorelementen (24) erfassten Lichtwerte auszuwerten, um die übermittelten Daten (56) zu bestimmen, wobei das Auswertegerät (14) ferner ausgebildet ist, die von den Lichtsensorelementen (24) erfassten Lichtwerte entlang einer jeweiligen Zeile (26) oder Spalte (28) der Lichterfassungseinheit (22) innerhalb eines jeweiligen Auslesezeitraums auszulesen, der kleiner als eine halbe Periodendauer einer größten in dem vorgegebenen Modulationsverfahren (48) genutzten Modulationsfrequenz (f0, f1, f2, f3) ist,
**dadurch gekennzeichnet, dass**
das Funktionsgerät (12) ferner ausgebildet ist, in dem vorgegebenen Modulationsverfahren (48) Modulationsfrequenzen (f0, f1, f2, f3) des Modulationsverfahrens (48) zu verwenden, die größer als 1,2 kHz sind.

13. Funktionsgerät (12) des Systems (10) nach Anspruch 12.

14. Auswertegerät (14) des Systems (10) nach Anspruch 12.

15. Auswertegerät nach Anspruch 14, **gekennzeichnet durch** ein Smartphone, das eine Kamera als Lichterfassungseinheit (22) aufweist, die die erfassten Lichtwerte in Form eines Videodatenstroms (46) von Bildern (42) mit Bilddaten (44) bereitstellt, wobei auf dem Smartphone (14) eine Anwendung installiert ist, die die von der Kamera (22) bereitgestellten Bilddaten (44) auswertet, um die übermittelten Daten (56) zu bestimmen.
